# EUROPEAN PATENT APPLICATION

(11) **EP 1 691 577 A2**
(43) Date of publication of application: **16.08.2006**
(21) Application number: 06000307.6
(22) Date of filing: 09.01.2006
(51) Int. Cl.: H04S 1/00

(54) **Apparatus for outputting monaural and stereophonic sound for mobile communication terminal**

(30) Priority: 11.02.2005 KR 2005011692
(71) Applicant: LG Electronics Inc., Yongdungpo-Gu Seoul (KR)
(72) Inventor: Chu, Sung-Ho, Seoul (KR)
(74) Representative: Katérle, Axel

(57) **Abstract**

An apparatus for outputting mono and stereo sound signals in a mobile communication terminal. The apparatus includes a stereo codec outputting a stereo sound signal, a first path unit processing the stereo sound signal outputted from the stereo codec, a second path unit processing the stereo sound signal outputted from the stereo codec into a mono sound signal, and a sound output unit connected with the first and second path units and reproducing the stereo and mono sound signals.

## Description

### BACKGROUND OF THE INVENTION

### 1. Field of the Invention

The present invention relates to a mobile communication terminal, and more particularly to an apparatus using multiple sound source output units for outputting monaural and stereophonic sound on the mobile communication terminal.

### 2. Description of the Related Art

A mobile communication terminal can be carried by a user thereby allowing the user to communicate with another party while the user is moving about. This is accomplished via a MSC (Mobile Switching Center) in conjunction with a plurality of base stations (BS) serving corresponding mobile cells. The mobile terminal allows the user to transmit data (e.g. symbols, numbers and characters) and also allows the user to view/transmit/receive multimedia data, in addition to providing voice communication. Further, mobile terminals also include an internal or external camera allowing the user to transmit video in real time. Thus, the users are able to communicate with each other using a video call communication process. Therefore, the significance of an apparatus for outputting mono and stereo sound is increasing.

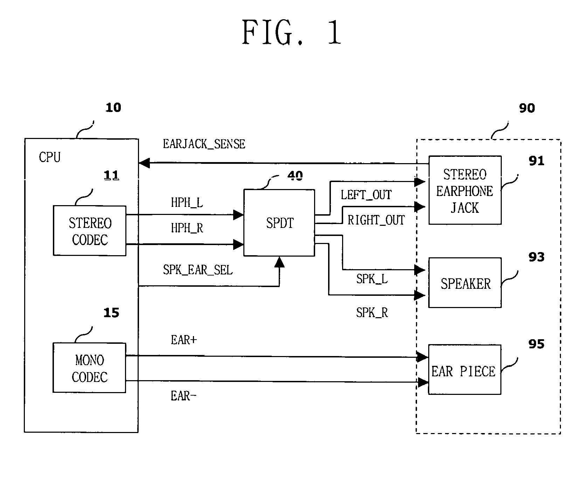

A related art apparatus for outputting mono and stereo sound will now be described with reference to Figure 1. As shown in Figure 1, the related art apparatus includes a stereo CODEC 11 for reproducing a stereo sound signal, an SPDT (Single Pole Double Throw) switch 40, a stereo earphone jack 91, a speaker 93, a mono CODEC 15 for reproducing a mono sound signal, and an earpiece 95. The related art terminal also includes a CPU (Central Processing Unit) 10.

An operation of the related art apparatus for outputting a mono and stereo sound in the terminal of Figure 1 will now be described. First, when the CPU 10 of the mobile terminal receives stereo sound data, the CPU 10 processes the stereo sound data through the stereo CODEC 11 and outputs a stereo sound signal to HPH_R and HPH_L terminals. The HPH_R and HPH_L terminals, respectively, provide the output stereo sound signals to left and right speakers, ear pieces, etc.

The SPDT switch 40 selectively connects the stereo sound signal output to the HPH_R and HPH_L terminals to the stereo earphone jack 91 through LEFT_OUT and RIGHT_OUT terminals or to the speaker 93 through SPK_L and SPK_R terminals to reproduce the stereo sound. In this instance, the SPDT switch 40 can select the stereo earphone jack 91 or the speaker 93 for reproducing the stereo sound based on a control signal, namely, a SPK_EAR_SEL signal, output from the CPU 10.

When the CPU 10 receives mono sound data, the CPU 10 processes the received mono sound data through the mono CODEC 15 and outputs a mono sound signal to the EAR+ and EAR- terminals, so that the mono sound signal can be reproduced through the ear piece 95.

Further, if the CPU 10 senses that an ear phone is connected to the stereo earphone jack 91 via a sense signal, such as an EARJACK_SENSE signal, the CPU 10 stops outputting the mono sound signal on the EAR+ and EAR- terminals and outputs a stereo signal on the HPH_R and HPH_L terminals, so that stereo sound is reproduced through the ear phone connected to the stereo earphone jack 91.

As stated above, in the related art mobile terminal, when the earphone is inserted into the stereo earphone jack 91, only the stereo earphone jack 91 or the speaker is driven 93, and thus the plurality of available sound output units is not effectively used.

### SUMMARY OF THE INVENTION

Accordingly, one object of the present invention is to address the above-noted and other problems.

Another object of the present invention is to effectively output mono and stereo sound on a mobile communication terminal to a plurality of available sound output units.

To achieve these and other advantages and in accordance with the purpose of the present invention, as embodied and broadly described herein, the present invention provides a novel apparatus for outputting sound signals in a mobile communication terminal. The apparatus according to one aspect of the present invention includes a stereo coder/decoder configured to output a stereo sound signal, a first path unit configured to process the stereo sound signal output from the stereo coder/decoder, a second path unit configured to convert the stereo sound signal output from the stereo coder/decoder into a mono sound signal, and a sound output unit connected with the first and second path units and configured to output the stereo and mono sound signals.

According to another aspect of the present invention, there is provided an apparatus for outputting sound signals in a mobile communication terminal including a mono coder/decoder configured to output a mono sound signal, a first path unit configured to process the mono sound signal output from the mono coder/decoder and to output the first-path-processed mono sound signal to a mono sound output unit, and a second path unit configured to process the mono sound signal output from the mono coder/decoder and to output the second-path-processed mono sound signal to a stereo sound output unit.

According to yet another aspect of the present invention, there is provided an apparatus for outputting sound signals in a mobile communication terminal including a stereo coder/decoder configured to output a stereo sound signal, a mono coder/decoder configured to output a mono sound signal, a first splitter configured to receive the stereo sound signal output from the stereo coder/decoder and to output first and second stereo sound signals, and a mono coder/decoder converter configured to receive the second stereo sound signal output from the first splitter and to convert the second stereo sound signal into a mono sound signal. Also included is a switch configured to be switched into a state to receive the converted mono sound signal from the mono coder/decoder converter or to receive the mono sound signal output from the mono coder/decoder and to output one of the mono sound signal from the mono decoder/coder or the converted mono sound signal from the mono coder/decoder converter, a second splitter configured to receive the sound signal output from the switch and to output first and second mono sound signals, another switch configured to be switched into a state to receive the first stereo sound signal output from the first splitter or to receive the second mono sound signal output from the second splitter and to output one of the stereo and mono sound signals, a single pole double throw (SPDT) switch configured to receive either the stereo or mono sound signal output from the another switch and to output the received sound signal to a stereo sound output unit, and a phase shifter configured to receive the sound signal output from the second splitter, to shift a phase of the received sound signal to correspond with a phase of the sound signal output from the SPDT switch, and to output the phase-shifted sound signal to a mono sound output unit.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:
Figure 1 is a block diagram showing a related art apparatus for outputting mono and stereo sounds in a mobile communication terminal;
Figure 2 is a block diagram showing an apparatus according to one embodiment of the present invention for outputting stereo sound in a mobile communication terminal; and
Figure 3 is a block diagram showing an apparatus according to another embodiment of the present invention for outputting mono sound in a mobile communication terminal.

### DETAILED DESCRIPTION OF THE PREFERRED EMBODIMENTS

Reference will now be made in detail to the preferred embodiments of the present invention, examples of which are illustrated in the accompanying drawings.

An operation for each case of receiving and splitting a mono sound and a stereo sound will now be discussed.

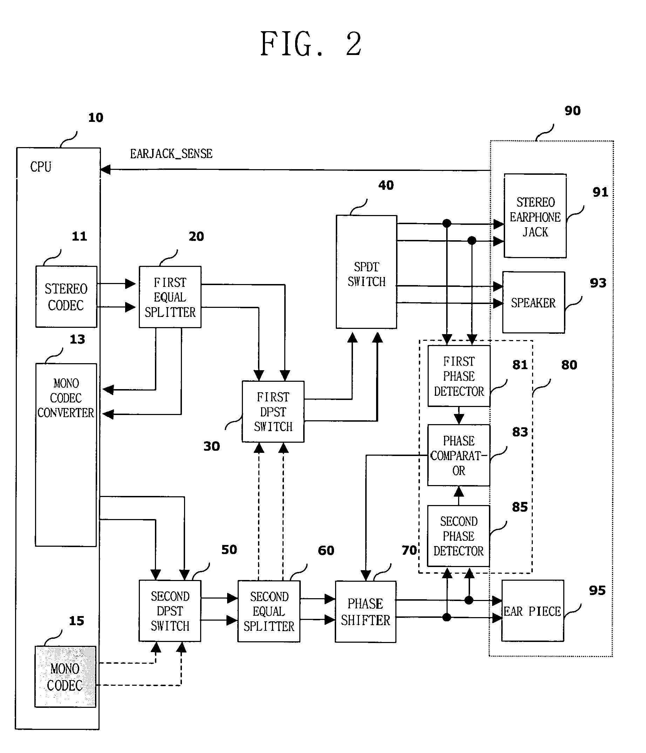

First, Figure 2 is a block diagram showing the apparatus according to one embodiment of the present invention for outputting a stereo sound signal in a mobile communication terminal. As shown in Figure 2, the apparatus includes a stereo CODEC 11 for outputting a stereo sound signal, a first path unit for processing the stereo sound signal output from the stereo CODEC 11, a second path unit for processing the stereo sound signal output from the stereo CODEC 11 into a mono sound signal, and a sound output unit 90 connected with the first and second path units. The first and second path units are described in greater detail below. Further, the sound output unit 90 reproduces stereo and mono sound signals, and as shown, includes a stereo earphone jack 91, a speaker 93 and a mobile terminal ear piece 95.

Further, the first path unit includes a first equal splitter 20 for generating first and second stereo sound signals based on the stereo sound signal output from the stereo CODEC 11, a first double pole single throw (DPST) switch 30, and a single pole double throw (SPDT) switch 40. In addition, the second path unit includes the first equal splitter 20, a mono CODEC converter 13 for converting the second stereo sound signal output from the splitter 20 into a mono sound signal, a second DPST switch 50, a second equal splitter 60 for generating first and second mono sound signals and a phase shifter 70. Further, the first stereo sound signals are output from the splitter 20 to the first DPST switch 30, and the second stereo signals are output from the splitter 20 to the mono CODEC converter 13.

Note that Figure 2 illustrates two branches for each output signal. The two branches correspond to left and right signals. In addition, the first mono sound signals are output from the second splitter 60 to the first DPST switch 30 and the second mono sound signals are output from the second splitter 60 to the phase shifter 70. Further, the phase shifter 70 shifts a phase of the second mono sound signals output from the splitter 60 to correspond with a phase of the stereo sound signals output from the first path unit. The phase shifter 70 also outputs the second mono signal to the sound output unit 90. Note that in this embodiment, the first DPST switch 30 is set to directly output the stereo sound signals from the first splitter 20 to the SPDT switch 40. The first mono sound signals from the second splitter 60 are not processed further, and hence this branch is shown as a dotted line in Figure 2.

An operational principle of the apparatus for outputting stereo sound in the mobile communication terminal will now be described with reference to Figure 2.

First, when the CPU 10 receives a stereo sound signal, the CPU 10 processes the stereo sound signal through the stereo CODEC 11 and then outputs the processed stereo sound signal to the first equal splitter 20. Because the first equal splitter 20 generates two equal outputs with respect to one input (i.e., the first and second stereo sound signals), the splitter 20 outputs the received stereo sound signal not only to the first path unit, but also to the second path unit. As discussed above, the second path unit converts the stereo sound signal into a mono sound signal.

Further, the first DPST switch 30 outputs the first stereo sound signal received from the first equal splitter 20 to the SPDT switch 40, and the SPDT 40 outputs the first stereo sound signal to the sound output unit 90, namely, to the stereo earphone jack 91 or the speaker 93. Accordingly, the mobile terminal reproduces the stereo sound through an earphone connected to the stereo earphone jack 91 or through the speaker 93.

Meanwhile, the mono CODEC converter 13 converts the second stereo sound signal output from the first equal splitter 20 into a mono sound signal and then outputs the converted mono sound signal to the phase shifter 70 via the second DPST switch 50 and the second equal splitter 60. Further, the phase shifter 70 shifts a phase of the converted mono sound signal to correspond with a phase of the stereo sound signal output from the SPDT switch 40. In this instance, the phase shifter 70 shifts the phase of the converted mono sound signal based on a result detected by a phase detecting unit 80.

As shown in Figure 2, the phase detecting unit 80 includes a first phase detector 81 for detecting the phase of the stereo sound signal output from the SPDT switch 40, a second phase detector 85 for detecting the phase of the converted mono sound signal, and a phase comparator 83 for comparing the detected phases of the stereo and mono sound signals and outputting a comparison result.

In addition, note that the mono CODEC 15 is not used in this embodiment and the second DPST switch 50 is switched to output the converted mono sound signal from the mono CODEC converter 13 to the second equal splitter 50. Further, in this embodiment and as discussed above, the first DPST switch 30 is switched to output the first stereo sound signal received from the first equal splitter 20 to the SPDT switch 40.

Accordingly, when the mobile terminal receives a stereo sound signal, the terminal not only reproduces the stereo sound but also converts the stereo sound into a mono sound signal and reproduces both sound signals using the plurality of available output units.

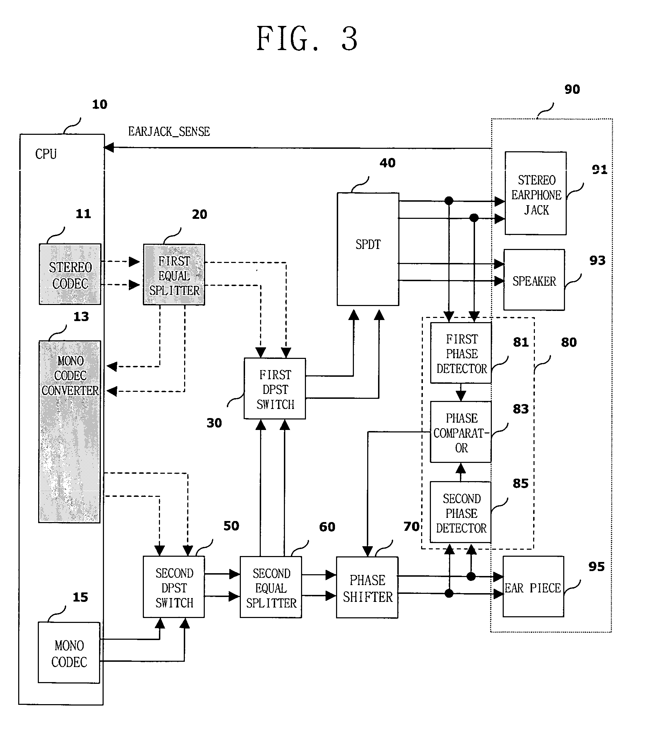

An operational principle of the apparatus for outputting a mono sound signal in the mobile terminal will now be described with reference to Figure 3. Note, the elements in Figure 3 are the same as in Figure 2, but the operation of the elements is different. In more detail, a third path unit is defined as including the second DPST switch 50, the second equal splitter 60 and the phase shifter 70. A fourth path unit is defined as including the second DPST switch 50, the second equal splitter 60, the first DPST switch 30 and the SPDT switch 40.

First, when the CPU 10 receives a mono sound signal (data), the CPU 10 processes the mono sound signal via the mono CODEC 15 and outputs the processed mono sound signal to the second equal splitter 60 via the second DPST switch 50. That is, the second DPST switch is switched to output signals from the mono CODEC 15 rather than from the mono CODEC converter 13. Upon receiving the mono sound signal, the second equal splitter 60 not only outputs the mono sound signal to the phase shifter 70 in the third path unit, but also outputs the mono sound signal to the first DPST switch 30 in the fourth path unit. Further, the phase shifter 70 then outputs the mono signal to the output unit 90, namely, the ear piece 95, so the mobile terminal can reproduce the mono sound through the ear piece 95.

In addition, the first DPST switch 30 is switched such that the mono sound signal received from the second equal splitter 60 is output to the stereo earphone jack 91 and the speaker 93 through the SPDT 40, so the mobile terminal can reproduce the mono sound through an ear phone connected with the stereo earphone jack 91 or through the speaker 93. Note that the stereo CODEC 11, mono CODEC converter 13 and first equal splitter 20 are not used in this embodiment (and are thus darkened in Figure 3).

Accordingly, when the mobile terminal receives a mono sound signal, the terminal reproduces the mono sound not only through a sound output unit for outputting mono sound signals but also through a sound output unit for outputting stereo sound signals such that the plurality of sound output units is effectively used.

As so far described, the apparatus for outputting stereo and mono sound signals in the mobile communication terminal has the advantage that one of a stereo sound signal and a mono sound signal can be received and then outputted to a plurality of sound output units. Thus, the plurality of sound output units can be effectively used.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An apparatus for outputting sound signals in a mobile communication terminal, comprising:
a stereo coder/decoder configured to output a stereo sound signal;
a first path unit configured to process the stereo sound signal output from the stereo coder/decoder;
a second path unit configured to convert the stereo sound signal output from the stereo coder/decoder into a mono sound signal; and
a sound output unit connected with the first and second path units and
configured to output the stereo and mono sound signals.

2. The apparatus of claim 1, wherein the first path unit comprises:
a first equal splitter configured to output first and second stereo sound signals based on the stereo sound signal output from the stereo coder/decoder;
a first double pole single throw (dpst) switch configured to be switched into a state to receive the first stereo sound signal output from the first equal splitter and to output the received first stereo sound signal; and
a single pole double throw (spdt) switch configured to receive the first stereo sound signal from the first dpst switch and to output the first stereo sound signal to the sound output unit.

3. The apparatus of claim 2, wherein the sound output unit includes a stereo earphone jack and a speaker configured to reproduce the stereo sound signal.

4. The apparatus of claim 2, wherein the second path unit comprises:
the first equal splitter configured to output the first and second stereo sound signals based on the stereo sound signal output from the stereo coder/decoder;
a mono coder/decoder converter configured to receive the second stereo sound signal output from the first equal splitter and to convert the second stereo sound signal into a mono sound signal;
a second dpst switch configured to be switched into a state to receive the converted mono sound signal and to output the converted mono sound signal; a second equal splitter configured to receive the converted mono sound signal and to output first and second mono sound signals; and
a phase shifter configured to receive the second mono sound signal output from the second equal splitter, to shift a phase of the second mono sound signal to correspond with a phase of the stereo sound signal output from the spdt switch, and to output the phase-shifted converted mono sound signal to the sound output unit.

5. The apparatus of claim 4, wherein the sound output unit is an ear piece configured to reproduce the phase-shifted converted mono sound signal.

6. The apparatus of claim 4, further comprising:
a phase detecting unit configured to detect phases of the stereo sound signal and the converted mono sound signal and to provide a difference between the phases to the phase shifter.

7. The apparatus of claim 6, wherein the phase detecting unit comprises:
a first phase detector configured to detect the phase of the stereo sound signal output from the spdt switch;
a second phase detector configured to detect the phase of the converted mono sound signal output for the phase shifter; and
a phase comparator configured to compare the phases detected by the first and second phase detectors and to output a comparison result to the phase shifter.

8. An apparatus for outputting sound signals in a mobile communication terminal, comprising:
a mono coder/decoder configured to output a mono sound signal;
a first path unit configured to process the mono sound signal output from the mono coder/decoder and to output the first-path-processed mono sound signal to a mono sound output unit; and
a second path unit configured to process the mono sound signal output from the mono coder/decoder and to output the second-path-processed mono sound signal to a stereo sound output unit.

9. The apparatus of claim 8, wherein the second path unit comprises:
a double pole single throw (dpst) switch configured to be switched into a state to receive the mono sound signal from the mono coder/decoder and to output the mono sound signal;
an equal splitter configured to receive the mono sound signal from the dpst switch and to generate and output first and second mono sound signals;
another dpst switch configured to be switched into a state to receive the second mono sound signal output from the equal splitter and to output the second mono sound signal; and
a single pole double throw (spdt) switch configured to receive the second mono sound signal output from the another dpst switch and to output the second mono sound signal to the stereo sound output unit.

10. The apparatus of claim 9, wherein the first path unit comprises:
the dpst switch and the equal splitter; and
a phase shifter configured to receive the first mono sound signal output from the equal splitter, to shift a phase of the first mono sound signal to correspond with a phase of the second mono sound signal output from the spdt switch, and to output the first mono sound signal to the mono sound output unit.

11. The apparatus of claim 10, further comprising:
a phase detecting unit configured to detect phases of the first and second mono sound signals and to provide a difference between the phases to the phase shifter.

12. The apparatus of claim 10, wherein the phase detecting unit comprises:
a first phase detector configured to detect the phase of the second mono sound signal output from the spdt switch;
a second phase detector configured to detect the phase of the first mono sound signal output from the phase shifter; and
a phase comparator configured to compare the phases detected by the first and second phase detectors and to output a comparison result to the phase shifter.

13. The apparatus of claim 8, wherein the stereo sound output unit includes an earphone jack and a speaker configured to reproduce the second mono sound signal, and the mono sound output unit is an ear piece configured to reproduce the first mono sound signal.

14. An apparatus for outputting sound signals in a mobile communication terminal comprising:
a stereo coder/decoder configured to output a stereo sound signal;
a mono coder/decoder configured to output a mono sound signal;
a first splitter configured to receive the stereo sound signal output from the stereo coder/decoder and to output first and second stereo sound signals;
a mono coder/decoder converter configured to receive the second stereo sound signal output from the first splitter and to convert the second stereo sound signal into a mono sound signal;
a switch configured to be switched into a state to receive the converted mono sound signal from the mono coder/decoder converter or to receive the mono sound signal output from the mono coder/decoder, and to output one of the mono sound signal from the mono decoder/coder or the converted mono sound signal from the mono coder/decoder converter;
a second splitter configured to receive the sound signal output from the switch and to output first and second mono sound signals;
another switch configured to be switched into a state to receive the first stereo sound signal output from the first splitter or to receive the second mono sound signal output from the second splitter, and to output one of the stereo and mono sound signals;
a single pole double throw (spdt) switch configured to receive either the stereo or mono sound signal output from the another switch and to output the received sound signal to a stereo sound output unit; and
a phase shifter configured to receive the sound signal output from the second splitter, to shift a phase of the received sound signal to correspond with a phase of the sound signal output from the spdt switch, and configured to output the phase-shifted sound signal to a mono sound output unit.

15. The apparatus of claim 14, wherein the stereo sound output unit includes a stereo earphone jack and a speaker configured to reproduce the stereo sound signal, and the mono output unit is an ear piece configured to reproduce the mono sound signal.

16. The apparatus of claim 14, further comprising:
a phase detecting unit configured to detect phases of the sound signals output from the SPDT switch and the phase shifter, and to provide a difference between the phases to the phase shifter.

17. The apparatus of claim 16, wherein the phase detecting unit comprises:
a first phase detector configured to detect the phase of the sound signal output from the SPDT switch;
a second phase detector configured to detect the phase of the sound signal output for the phase shifter; and
a phase comparator configured to compare the phases detected by the first and second phase detectors and configured to output a comparison result to the phase shifter.

18. The apparatus of claim 14, wherein when the mobile terminal receives a stereo sounds signal via the stereo coder/decoder:
the first equal splitter receives the stereo sound signal output from the stereo coder/decoder, and generates and outputs first and second mono sound signals,
the another switch is switched into the state to receive the first mono sound signal output from the first equal splitter and to output the mono stereo sound signal to the SPDT switch, which outputs the stereo sound signal to the stereo sound output unit,
the mono coder/decoder converter converts the second stereo sound signal from the first equal splitter into a mono sound signal and outputs the converted mono sound signal,
the switch is switched into the state to receive the converted mono sound signal output from the mono coder/decoder converter, and to output the converted mono sound signal to the phase shifter via the second splitter, and
the phase shifter shifts a phase of the converted mono sound signal to be the same as the phase of the stereo sound signal output from the SPDT switch, and outputs the phase-shifted mono sound signal to a mono sound output unit.

19. The apparatus of claim 14, wherein when the mobile terminal receives a mono sound signal via the mono coder/decoder:
the switch is switched into the state to receive the mono sound signal output from the mono coder/decoder and to output the mono sound signal to the second splitter,
the second splitter receives the mono sound signal from the switch and
generates and outputs first and second mono sound signals,
the another switch is switched into the state to receive the second mono sound signal output from the second splitter and to output the second mono sound signal to the stereo sound output unit via the spdt switch, and
the phase shifter receives the first mono sound signal output from the second splitter and shifts a phase of the first mono sound signal to be the same as the phase of the second mono sound signal output to the stereo sound output unit, and outputs the phase-shifted first mono sound signal to the mono sound output unit.
